# EUROPEAN PATENT APPLICATION

(11) **EP 4 488 911 A1**
(43) Date of publication of application: **08.01.2025**
(21) Application number: 23315271.9
(22) Date of filing: 06.07.2023
(51) Int. Cl.: G06Q 20/32, G06Q 20/38, G06Q 20/40

(54) **METHOD FOR CONSTRUCTING A LIMITED-USE KEY REQUIRED FOR A FINANCIAL TRANSACTION**

(71) Applicant: THALES DIS FRANCE SAS, 92190 Meudon (FR)
(72) Inventor: Pandian, Gautam Arvind, 670166 SINGAPORE (SG); Zenou, Frédéric, 13012 Marseille (FR)
(74) Representative: Grevin, Emmanuel

(57) **Abstract**

The invention is a method for constructing a limited-use key (80) required by a payment application (10) hosted in a portable device (30) and able to perform a financial transaction for an amount. The payment application is able to construct the limited-use key in two distinct ways, the first way and the second way. During the financial transaction the payment application or a payment terminal coupled to the portable device determines that the financial transaction is a High Value Transaction (HVT) if said amount is higher than a preset threshold and considers that the financial transaction is a Low Value Transaction (LVT) in the opposite case. Then the payment application constructs the limited-use key (80) either by said first way only in case of High Value Transaction or by said second way only in case of Low Value Transaction.

## Description

### (Field of the invention)

The present invention relates to methods for constructing a limited-use key for a financial transaction. It relates particularly to methods for building a limited-use key required by a payment application during a financial transaction involving a mobile device.

### (Background of the invention)

A limited-use key (LUK) is a key that has a limited usage or lifespan. A LUK can be used as a key to generate an applicative cryptogram required to complete a transaction.A LUK can be a cryptogram key use to compute a cryptogram with data collected from a transaction (E.g. transaction amount, transaction currency, transaction date, Application Transaction Counter - ATC, Unpredictable Number, etc.) and used by the host authorization system to perform validation of the cryptogram and so secure the transaction. For example, a LUK can be a 3DES MAC key or an AES (Advance Encryption Standard) key.

Limited-use keys may be associated with a Payment Token replacing a Primary Account Number (PAN) to avoid exposure of a PAN in mobile device.

Payment applications /wallets hosted in a mobile device may use a limited-use key for securely protecting the payment transactions. The same LUK can be used for multiple transactions and also for both High Value Transactions (HVT) and Low Value Transactions (LVT). A HVT is a transaction whose amount exceeds a certain threshold.

Mobile payment systems which support handling limited-use keys, following the EMV^{®} especially Visa Specification may require to support both HVT and LVT. For HVT, the payment key is supposed to be used only after-a successful user authentication is performed. For LVT, the payment key can be used to generate cryptogram without user authentication.

The document US2015/0180836-A1 describes a mechanism to conduct a transaction in which a LUK may be associated with a set of one or more limited-use thresholds that limits usage of the LUK.

The document US2022/0019995-A1 describes a method for conducting a transaction wherein key index information (including a key index having information pertaining to generation of the limited-use key) is encrypted using a second key to generate the limited-use key (LUK).

### (Summary of the Invention)

Using a same payment key both with and without authentication depending on the type of transaction induces a security weakness. This brings out the security challenge to always bind the LUK payment key cryptographically with user authentication, leading to weak security schemes relying on Boolean result of user authentication. The problem of not cryptographically binding the LUK to user authentication leads to malware exploitation or adversary on stolen device faking a successful authentication without the actual presence of the user.

There is a need to enhance the management of LUK payment keys by an application embedded in a mobile terminal.

The invention aims at solving the above-mentioned technical problem.

The invention relies on a solution which achieves cryptographic binding of the LUK payment keys when used for both HVT and LVT, by having a security scheme which protects the payment keys differently for HVT and LVT while it retains the security properties of cryptographic binding of device and user authentication for HVT, whereas cryptographic binding with device is achieved for LVT.

An object of the present invention is a computed-implemented method for constructing a limited-use key (LUK) which is required by a payment application hosted in a portable device and which is able to perform a financial transaction for an amount. The payment application is configured to construct the limited-use key in two distinct ways, the first way and the second way. The method comprises during said financial transaction a step of determining, by the payment application or a payment terminal coupled to the portable device, that the financial transaction is a High Value Transaction (HVT) if said amount is higher than a preset threshold and considering that the financial transaction is a Low Value Transaction (LVT) in the opposite case; and a step of constructing the limited-use key by the payment application either by said first way only in case of High Value Transaction or by said second way only in case of Low Value Transaction.

Advantageously, the portable device may be assigned to a user, the portable device may comprise a storage area storing a first key (Kshared) and a second key (Kdevice) which can be retrieved from the storage area whether or not the user has been successfully authenticated by the portable device; said second key (Kdevice) being uniquely assigned to said portable device. The storage area may store a third key (KAuth) which can be retrieved from the storage area only if the user has been successfully authenticated by the portable device; said first, second and third keys being distinct. When said first way is used, the payment application may try to retrieve both said third (KAuth) and first (Kshared) keys from the storage area and if said third (KAuth) key is accessible and build the limited-use key using both said third (KAuth)- and first (Kshared) keys. When said second way is used, the payment application may get both said first (Kshared) and second (Kdevice) keys from the storage area and build the limited-use key using both said first (Kshared) and second (Kdevice) keys.

Advantageously, the portable device may comprise pre-provisioned first (LukLvt), second (NonceLvt), third (LukHvt) and fourth (NonceHvt) secret data in encrypted form. In case of High Value Transaction, the payment application may retrieve the third secret data (LukHvt) by deciphering its encrypted form using the first key (Kshared) and retrieve the fourth secret data (NonceHvt) by deciphering its encrypted form using the third key (KAuth), then the payment application may construct the limited-use key by applying a first mathematical function to both said third and fourth secret data. In case of Low Value Transaction (LVT), the payment application may retrieve the first secret data (LukLvt) by deciphering its encrypted form using the first key (Kshared) and retrieves the second secret data (NonceLvt) by deciphering its encrypted form using the second key (KDevice), then the payment application may construct the limited-use key by applying a second mathematical function to both said first and second secret data.

Advantageously, the method may include a replenishment phase comprising:
- sending, by the portable device, a replenishment request to a provisioning server;
- responsive to the replenishment request, generating, by the provisioning server, said first (LukLvt), second (NonceLvt), third (LukHvt) and fourth (NonceHvt) secret data so that the limited-use key is equal to the result of said first mathematical function applied to both said third and fourth secret data and so that the limited-use key is equal to the result of said second mathematical function applied to both said first and second secret;
- then encrypting the first secret data (LukLvt) and the third secret data (LukHvt) using the first key (Kshared), encrypting the second secret data (NonceLvt) using the second key (KDevice) and encrypting the fourth secret data (NonceHvt) using the third key (KAuth);
- sending said first (LukLvt), second (NonceLvt), third (LukHvt) and fourth (NonceHvt) secret data in encrypted form to the portable device.

Advantageously, during an initial provisioning phase prior to the replenishment phase, the method may comprise:
- establishing a secure channel between the provisioning server and the portable device;
- generating and storing said first key (Kshared) in both the provisioning server and the portable device;
- sending said second (Kdevice) and third (KAuth) keys from the provisioning server to the portable device through the secure channel;
- storing the third key (KAuth) in the storage area by specifying that the payment application is authorized to retrieve said third key from the storage area only if the user has been successfully authenticated by the portable device and storing the second key (Kdevice) in the storage area by specifying that the payment application is authorizedto retrieve the second key from the storage area whether the user has been successfully authenticated or not.

Another object of the present invention is a portable device comprising a payment application configured to perform a financial transaction for an amount. The payment application is configured to construct a limited-use key in two distinct ways, the first way and the second way. During said financial transaction, the payment application is configured to:
- be informed by a coupled payment terminal that the financial transaction is a High Value Transaction (HVT) if said amount is higher than a preset threshold or that the financial transaction is a Low Value Transaction (LVT) in the opposite case; and construct the limited-use key either by said first way only in case of High Value Transaction or by said second way only in case of Low Value Transaction.

Advantageously, the portable device may be a mobile phone, a payment smart card, a payment bracelet, a payment ring, or a payment watch.

Advantageously, the portable device may be a mobile phone comprising a digital wallet hosting the payment application (10).

Advantageously, the portable device may be assigned to a user and the portable device may comprise a storage area storing a first key (Kshared) and a second key (Kdevice) which can be retrieved from the storage area whether or not the user has been successfully authenticated by the portable device; said second key (Kdevice) being uniquely assigned to said portable device. The storage area may store a third key (KAuth) which can be retrieved from the storage area only if the user has been successfully authenticated by the portable device; said first, second and third keys being distinct. When said first way is used, the payment application may be configured to try to retrieve both said third (KAuth) and first (Kshared) keys from the storage area and if said third (KAuth) key is accessible, to construct the limited-use key using both said third (KAuth) and first (Kshared) keys. When said second way is used, the payment application may be configured to get both said first (Kshared) and second (Kdevice) keys from the storage area and to construct the limited-use key using both said first (Kshared) and second (Kdevice) keys.

Advantageously, the portable device may comprise pre-provisioned first (LukLvt), second (NonceLvt), third (LukHvt) and fourth (NonceHvt) secret data in encrypted form. In case of High Value Transaction (HVT), the payment application may be configured to retrieve the third secret data (LukHvt) by deciphering its encrypted form using the first key (Kshared) and to retrieve the fourth secret data (NonceHvt) by deciphering its encrypted form using the third key (KAuth). Then the payment application may be configured to construct the limited-use key by applying a first mathematical function to both said third and fourth secret data; In case of Low Value Transaction (LVT), the payment application may be configured to retrieve the first secret data (LukLvt) by deciphering its encrypted form using the first key (Kshared) and to retrieve the second secret data (NonceLvt) by deciphering its encrypted form using the second key (KDevice), then the payment application may be configured to construct the limited-use key by applying a second mathematical function to both said first and second secret data.

Another object of the present invention is a system comprising a portable device according to the invention and a provisioning server configured to carry out a replenishment phase. The portable device may be configured to send a replenishment request to the provisioning server. Responsive to the replenishment request, the provisioning server may be configured to generate said first (LukLvt), second (NonceLvt), third (LukHvt) and fourth (NonceHvt) secret data so that the limited-use key is equal to the result of said first mathematical function applied to both said third and fourth secret data and so that the limited-use key is equal to the result of said second mathematical function applied to both said first and second secret. The provisioning server may be configured to encrypt the first secret data (LukLvt) and the third secret data (LukHvt) using the first key (Kshared), to encrypt the second secret data (NonceLvt) using the second key (KDevice) and to encrypt the fourth secret data (NonceHvt) using the third key (KAuth). The provisioning server may be configured to send said first (LukLvt), second (NonceLvt), third (LukHvt) and fourth (NonceHvt) secret data in encrypted form to the portable device.

Advantageously, during an initial provisioning phase prior to the replenishment phase, the portable device and the provisioning server may be configured to establish a secure channel between them. The system may be configured to generate and store said first key (Kshared) in both the provisioning server and the portable device. The provisioning server may be configured to send said second (Kdevice) and third (KAuth) keys to the portable device. The portable device may be configured to store the third key (KAuth) in the storage area by specifying that the third key can be retrieved from the storage area only if the user has been successfully authenticated by the portable device and to store the second key (Kdevice) in the storage area by specifying that the second key can be retrieved from the storage area whether the user has been successfully authenticated or not.

### (Brief description of the drawings)

Other characteristics and advantages of the present invention will emerge more clearly from a reading of the following description of a number of preferred embodiments of the invention with reference to the corresponding accompanying drawings in which:
- Fig. 1 shows an exemplary flow diagram for an initial provisioning phase according to an example of the invention;
- Fig. 2 shows an exemplary flow diagram for a replenishment phase according to an example of the invention;
- Fig. 3 shows an exemplary flow diagram for the building of a LUK according to an example of the invention;
- Fig. 4 shows a detailed flow diagram for the building of a LUK during a HVT according to an example of the invention;
- Fig. 5 shows a detailed flow diagram for the building of a LUK generation during a LVT according to an example of the invention
- Fig. 6 shows a diagram of architecture of a portable device according to an example of the invention; and
- Fig. 7 shows a diagram of architecture of a system including a portable device and a provisioning server according to an example of the invention.

### (Detailed description of the preferred embodiments)

The invention may apply to any type of mobile device embedding one or more applications able to participate to a financial transaction requiring usage of a LUK. Preferably, the portable device is a mobile phone.

In the domain of mobile device, a keystore is a secure storage area that can be hardware backed. The keys imported or generated within the keystore by default are device bound. Two key configurations can be individually set for each existing key stored in the secure storage area. First key configuration: The key can by-read from the keystore only after a successful authentication of the user. Second key configuration: the key can by read from the keystore even if the user has not been successfully authenticated by the device.

A conventional mechanism allows to set the configuration a key validity time period at the time of importing or generating key in keystore. When the user unlocks the device, the key in keystore can be accessed by an application within that key validity period.

Only the payment application which generated/imported the key can access the key in the keystore.

For the sake of clarity, an initial provisioning phase and a replenishment phase are detailed before constructing the LUK during a transaction.

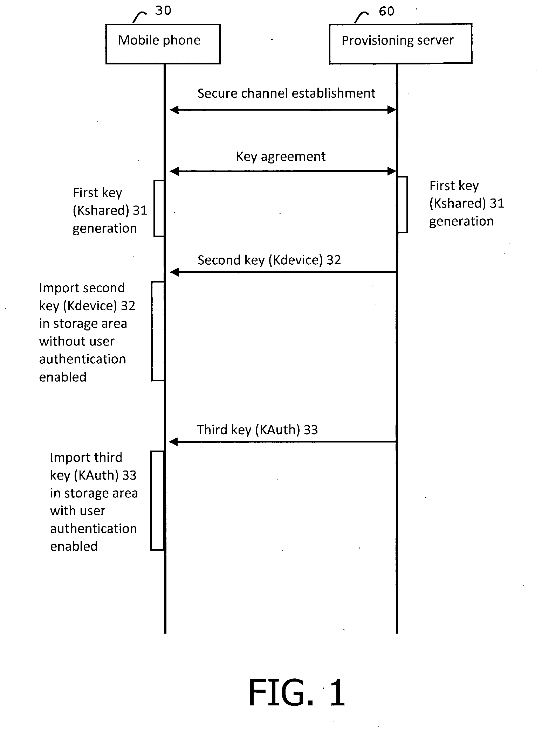

Figure 1 depicts an exemplary flow diagram for an initial provisioning phase according to an example of the invention.

In this example, the portable device 30 is a smartphone embedding a mobile application comprising a payment application (digital wallet). The payment application can be implemented through the Host Card Emulation (HCE) mechanism.

This initial provisioning phase aims at providing the portable device 30 with a key set known by a provisioning.server 60.

At a first step, both the portable device 30 and the provisioning server 60 establish a secure channel in a conventional manner. Such a secure channel can rely on a combination of Telecom, public (The Internet) and private networks.

Then the digital wallet can initiate a key agreement by generating its own key pair (i.e. private/public keys) and sharing its public key with the provisioning server.

Upon receipt of a key agreement request, the provisioning server can generate its own key pair and share its own.public key to the digital wallet.

Then both the provisioning server and the digital wallet can generate a first key 31 (named Kshared) which is stored in a secure storage on both sides. The first key is mainly intended to protect data exchanged between the provisioning server and the mobile device.

The provisioning server can identify a second key 32 (named KDevice) and securely send it to the digital wallet that stores it in the secure storage area of the mobile device without user authentication enabled (i.e. by setting the second key configuration). The second key is intended to be used for constructing a LUK during low value transactions.

Preferably, the second key 32 is uniquely assigned to the portable device 30.

The provisioning server can identify a third key 33 (named KAuth) and securely send it to the digital wallet that stores it in the secure storage area of the mobile device with user authentication enabled (i.e. by setting the first key configuration). The third key is intended to be used for constructing a LUK during high value transactions.

In some embodiments, the digital wallet may generate the second key 32 (KDevice) and/or the third key 33 (Kauth) and send it/them to the provisioning server.

In some embodiments, after validating that the digital wallet is a valid client, the provisioning server can allow the initial provisioning phase.

In some embodiments, the initial provisioning phase can be performed in another way. For instance, the initial provisioning phase can be done by loading, at a secure place, a key set predefined by the provisioning server.

In some embodiments, the provisioning server can send to the mobile device 30 the second 32 and third 33 keys protected (enciphered) by using the first key 31 (i.e. Kshared).

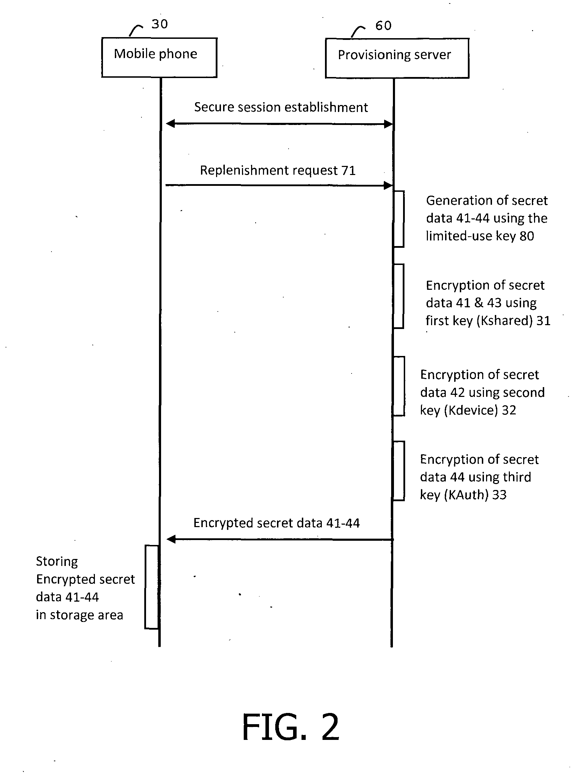

Figure 2 depicts an exemplary flow diagram for a replenishment phase according to an example of the invention.

In this example, the initial provisioning phase of . Fig. 1 is assumed to have been performed. The replenishment phase can occur when the mobile device needs to be provisioned with an initial limited-use key (LUK) or a new limited-use key.

At a first step, both the portable device 30 and the provisioning server 60 establish a secure channel in a conventional manner. In some embodiment, they can reuse the secure channel already established for the initial provisioning phase.

Then the digital wallet can send a replenishment request 71 to the provisioning server to trigger replenishment of a new LUK.

The provisioning server identifies a new limited-use key 80 either by generating a new value or retrieving a value from a secure store. The provisioning server may also get a new LUK from a coupled Key Management System.

The provisioning server identifies a first secret data 41 (named LukLvt) and generates a second secret data 42 (named NonceLvt) such that new LUK = LukLvt XOR NonceLvt, wherein XOR is the logical eXclusive OR function.

The provisioning server identifies a third secret data 43 (named LukHvt) and generates a fourth secret data 44 (named NonceHvt) such that new LUK = LukHvt XOR NonceHvt.

The provisioning server encrypts the first secret data 41 (i.e. LukLvt) with the first key 31 (i.e. Kshared) and the second secret data 42 (i.e. NonceLvt) with the second key 32 (i.e. Kdevice)

The provisioning server encrypts the third secret data 43 (i.e. LukHvt) with the first key 31 (i.e. Kshared) and the fourth secret data 44 (i.e. NonceHvt) with the third key 33 (i.e. KAuth).

The provisioning server sends the four encrypted keys (either one by one or all at once) to the mobile device 30 that stores all received encrypted keys in its secure storage area 39.

In some embodiments, the provisioning server can generate the second secret data 42 (i.e. NonceLvt) such that new LUK is equal to the result of another mathematical function applied to both the first secret data 41 (named LukLvt) and the second secret data 42 (NonceLvt). For instance, the provisioning server can use one of the following mathematical functions: AND, OR, NAND.

In some embodiments, the provisioning server can use a first mathematical function to generate the second secret data 42 (i.e. NonceLvt) and a second mathematical function (different from the first mathematical function) to generate the fourth secret data 44 (i.e. NonceHvt).

Preferably, the first key configuration (i.e. accessible whether the user has been authenticated or not) is set for the four secret data that are stored in the storage area 39 of the portable device.

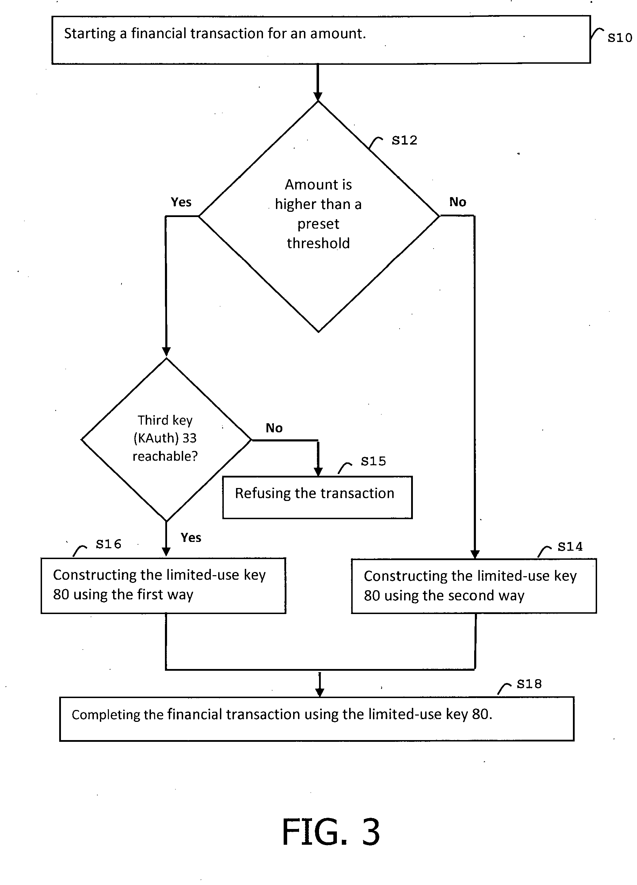

Figure 3 depicts an exemplary flow diagram for the building of a LUK during a monetary transaction according to an example of the invention.

In this example, the portable device 30 is a mobile phone embedding a digital wallet comprising a payment application. The initial provisioning phase and the replenishment phase are assumed to have been performed.

The payment application is designed to construct the limited-use key required by a financial transaction in two distinct ways, the first way and the second way.

At step S10, a financial transaction starts between on the payment application and a payment terminal which may be a conventional Point-Of-Sale (POS) terminal. The financial transaction can be a monetary transaction aiming at paying (or withdrawing) a certain money amount.

The payment terminal determines if the financial transaction is a high value transaction or a low value transaction by comparing the amount of the pending transaction with a preset threshold (step S12) and informs the payment application 10. For example, the preset threshold may be equal to 50 Euros or 44 US dollars.

In some embodiments, the payment terminal (POS/ATM) informs the payment application of the type of the transaction (i.e. HVT or LVT), then the payment application may apply an additional check with its own threshold which can lead to confirming the received transaction type or reclassifying the transaction type from LVT to HVT.

Then, only in case of Low Value Transaction, the payment application constructs the limited-use key 80 by the second way (step S14). Only in case of High Value Transaction, either the payment application constructs the limited-use key 80 by the first way (step S16) if the payment application can read the third key 33 (Kauth) in the storage area or the payment application refuses the pending financial transaction (step S15).

If the payment application does not deny the transaction, the payment application completes the financial transaction using the generated limited-use key 80 (step S18).

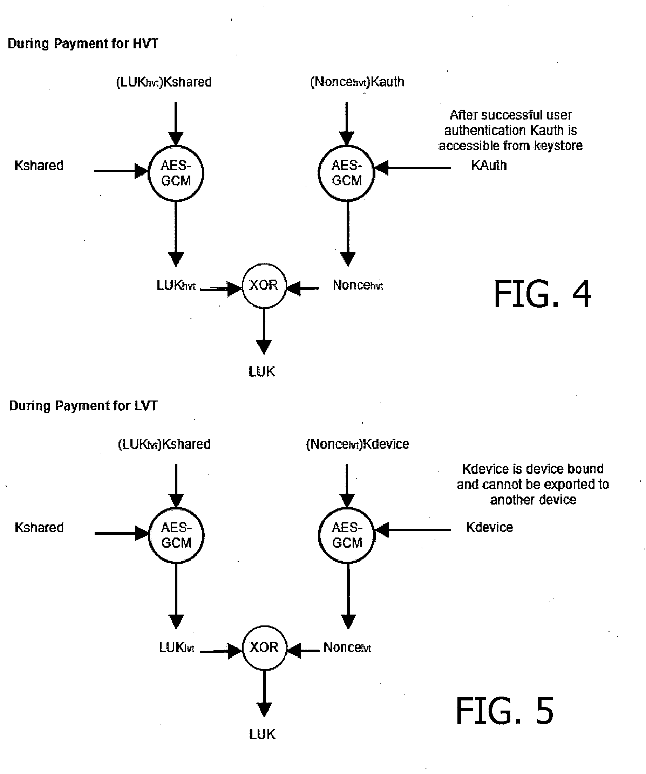

Figure 4 depicts a detailed flow diagram for the building of a limited-use key during a High value transaction according to an example of the invention.

Once the portable device 30 determined that the pending financial transaction is a high value transaction (cf. step S12 of Figure 3), the payment application constructs the limited-use key 80 by the first way.

More precisely, as shown at Figure 4, the payment application tries to read the third key 33 (i.e. KAuth) from the storage area. Since the reading of the third key 33 is subject to prior authentication of the user of the portable device 30, the payment application can only access the third key 33 if the user has been successfully authenticated by the portable device 30.

The key validity period set during key import will be enforced by the keystore when the application tries to access the key. If they user has just recently authenticated and it is within the validity period, then the keystore allows access to the key.

When the payment application gets the third key 33, it retrieves the encrypted fourth secret data 44 (i.e. NonceHvt in encrypted form) stored in the storage area of the mobile device and retrieves the fourth secret data 44 by decrypting the encrypted fourth secret data 44 by applying a decryption algorithm. The decryption algorithm can be predefined or specified in a metadata generated by the provisioning server and attached to the encrypted fourth secret data.

In the example of Figure 4, the decryption algorithm is the Advance Encryption Standard -Galois/Counter Mode (AES-GCM). As people skilled in the art know, other algorithms can be used instead of AES-GCM.

The payment application gets the first key 31 and the encrypted third secret data 43 (i.e. LukHvt in encrypted form) from the storage area of the mobile device and retrieves the third.secret data 43 by decrypting the encrypted third secret data 43 by applying a decryption algorithm. which may be the Advance Encryption Standard -Galois/Counter Mode (AES-GCM).

Then, the payment application constructs the LUK 80 by executing the first mathematical function using both the third 43 (i.e. LukHvt) and fourth 44 (i.e. NonceHvt) secret data as input parameters. In the example of Figure 4, the first mathematical function is the XOR function.

If the user was not authenticated, the payment application cannot construct the required LUK and refuses the pending financial transaction.

Figure 5 depicts a detailed flow diagram for the building of a limited-use key during a Low value transaction according to an example of the invention.

Once the portable device 30 determined that the pending financial transaction is a low value transaction (cf. step S12 of Figure 3), the payment application constructs the limited-use key 80 by the second way.

More precisely, as shown at Figure 5, the payment application reads the second key 32 (i.e. KDevice) from the storage area. It is to be noted that the payment application can access the second key 32 in the storage area whether the user has been authenticated or not by the mobile device.

The payment application retrieves the encrypted second secret data 42 (i.e. NonceLvt in encrypted form) stored in the storage area of the mobile device and retrieves the second secret data 42 (plain value) by decrypting the encrypted second secret data 42 by applying a decryption algorithm that can the AES-GCM. The decryption algorithm can be predefined or specified in a metadata generated by the provisioning server and attached to the encrypted second secret data.

The payment application gets the first key 31 (Kshared) and the encrypted first secret data 41 (i.e. LukLvt in encrypted form) from the storage area of the mobile device and retrieves the first secret data 41 by decrypting the encrypted first secret data 41 by applying a decryption algorithm that can be AES-GCM. The decryption algorithm can be predefined or specified in a metadata generated by the provisioning server and attached to the encrypted third secret data.

Then, the payment application constructs the LUK 80 by executing the second mathematical function using both the first 41 (i.e. LukLvt) and second 42 (i.e. NonceLvt) secret data as input parameters. In the example of Figure 5, the second mathematical function is the XOR function.

In the examples of Figures 4 and 5, all secret data are deciphered using the same decryption algorithm. Alternatively, each of the four secret data can be decrypted with a unique decryption algorithm that is individually allocated to it so that the secret data are decrypted by four different decryption algorithms.

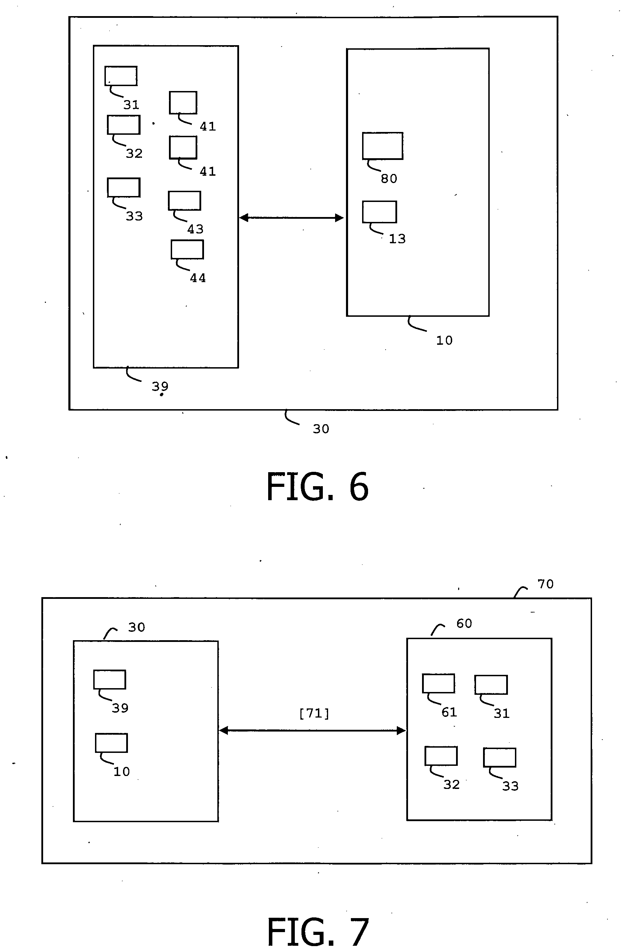

Figure 6 shows diagram of architecture of a portable device according to an example of the invention.

In this example, the portable device 30 is a smartphone.

The portable device 30 comprises a payment application 10 and a storage area 39.

The storage area may include a secure keystore and an additional part which may be freely accessed by the applications embedded in the mobile device.

The portable device 30 comprises an operating system and at least one hardware processor configured to execute the payment application. The portable device 30 comprises a communication interface able to exchange data with a payment terminal during financial transactions. For instance, the communication interface may rely on NFC or QR code technology.

The storage area (or a non-volatile memory) of the mobile device can store program instructions which are executed by the hardware processor to perform the functions of the mobile device.

The financial transaction may be a payment transaction or cash withdrawal for instance.

In some embodiment, a payment terminal coupled to the portable device 30 comprises a preset threshold and program instructions designed to determine if a pending financial transaction is a high value transaction or a low value transaction by comparing the amount of the pending transaction with the threshold and to send to the payment application a message reflecting the type of the transaction.

The payment application comprises program instructions 13 designed to construct the limited-use key 80 according to first and second ways depending on the type (HVT/LVT) of the pending transaction.

It should be noted that the first and second ways are different ways.

The storage area 39 comprises a first key 31 (Kshared) and a second key 32 (Kdevice) which can be retrieved from the storage area whether or not the user (of the mobile device) has been successfully authenticated by the smartphone. The second key 32 (Kdevice) can be uniquely assigned to the smartphone 30.

The storage area comprises a third key 33 (KAuth) which can be retrieved from the storage area only if the user has been successfully authenticated by the smartphone.

The portable device 30 may authenticate the user (i.e. the individual carrying the portable device) via a captured PIN code, password or biometric data for example.

It should be noted that the first, second and third keys are distinct.

When the first way is used, the payment application 10 is configured to try to retrieve both the third 33 (KAuth) and first 31 (Kshared) keys from the storage area 39. If the third 33 (KAuth) key is accessible (because the user has been successfully authenticated beforehand), the payment application 10 is configured to construct the limited-use key 80 using both the first 31 and third 33 (KAuth) keys.

When said second way is used, the payment application is configured to get both said first 31 (Kshared) and second 32 (Kdevice) keys from the storage area 39 and to construct the limited-use key 80 using both the first 31 and second 32 keys.

In some embodiments, the smartphone 30 comprises pre-provisioned first 41 (LukLvt), second 42 (NonceLvt), third 43 (LukHvt) and fourth 44 (NonceHvt) secret data in encrypted form.

In case of high value transaction (HVT), the payment application can be configured to retrieve the third secret data 43 (LukHvt) by deciphering its encrypted form using the first key 31 (Kshared) and to retrieve the fourth secret data 44 (NonceHvt) by deciphering its encrypted form using the third key 33 (KAuth).

As can be noted, the payment application can access the plain value of the fourth secret data 44 (NonceHvt) only if the user has been authenticated beforehand.

The payment application is configured to construct the limited-use key 80 by applying a first mathematical function to both the third and fourth secret data.

In case of low value transaction (LVT), the payment application can be configured to retrieve the first secret data 41 (LukLvt) by deciphering its encrypted form using the first key 31 (Kshared) and to retrieve the second secret data 42 (NonceLvt) by deciphering its encrypted form using the second key 32 (KDevice). The payment application can be configured to construct the limited-use key 80 by applying a second mathematical function to both the first and second secret data.

In a preferred embodiment the first and second mathematical functions are the XOR function.

The payment application is configured to use the constructed limited-use key 80 for completing the pending financial transaction. For instance, the payment application can use the limited-use key 80 for computing a cryptogram reflecting its agreement to complete the pending transaction.

Figure 7 shows diagram of architecture of a system including a portable device and a provisioning server according to an example of the invention.

The system 70 comprises a portable device 30 similar to the one described at Fig. 6 and a provisioning server 60 configured to carry out a replenishment phase.

The provisioning server 60 is (or is hosted by) a hardware server that can be located in a remote place. The provisioning server 60 can be a bank server comprising data related to a large number of bank accounts and bank customers for instance.

The portable device 30 is configured to send a replenishment request 71 to the provisioning server. In some embodiments, the smartphone 30 can comprise a digital wallet hosting the payment application 10 and.the digital wallet can be configured to trigger the sending of the replenishment request.

In some embodiments, the payment application 10 can be configured to trigger the sending of the replenishment request.

Responsive to the replenishment request 71, the provisioning server is configured to generate a first 41 (LukLvt), second 42 (NonceLvt), third 43 (LukHvt) and fourth 44 (NonceHvt) secret data so that the limited-use , key 80 is equal to the result of a first mathematical function applied to both the third and fourth secret data and so that the limited-use key 80 is equal to the result of a second mathematical function applied to both the first and second secret.

The provisioning server is configured to encrypt the first secret data 41 (LukLvt) and the third secret data 43 (LukHvt) using the first key 31 (Kshared), to encrypt the second secret data 42 (NonceLvt) using the second key 32 (KDevice) and to encrypt the fourth secret data 44 (NonceHvt) using the third key 33 (KAuth).

The provisioning server is configured to send said first 41 (LukLvt), second 42 (NonceLvt), third 43 (LukHvt) and fourth 44 (NonceHvt) secret data in encrypted form to the portable device 30.

The provisioning server 60 comprises a set 61 of program instructions which are executed by the hardware processor to perform the functions of the provisioning server.

In some embodiments, during an initial provisioning phase prior to the replenishment phase, the portable device 30 and the provisioning server 60 can be configured to establish a secure channel between them to perform an initial provisioning phase.

The system 70 can be configured to generate and store the first key 31 (Kshared) in both the provisioning server and the portable device.

In some embodiments, both the provisioning server and the portable device can generate the same first key 31 (Kshared) by themselves (from shared data).

In some embodiments, the provisioning server can generate and send the first key 31 (Kshared) to the portable device.

The provisioning server is configured to send the second 32 (Kdevice) and third 33 (KAuth) keys to the portable device.

The portable device 30 is configured to store the received third key 33 (KAuth) in the storage area 39 by specifying that the third key 33 can be retrieved from the storage area only if the user has been successfully authenticated by the portable device and to store the second key 32 (Kdevice) in the storage area by specifying that the second key can be retrieved from the storage area whether the user has been successfully authenticated or not.

Some embodiments of the invention bring stronger security for management of LUK payment keys by means of cryptographically binding it with user authentication for HVT and cryptographically binding it with device for LVT.

An advantage of some embodiments of the invention is to thwart attacks related to malware residing on the portable device triggering cryptogram generation without user presence even for HVT.

An advantage of some embodiments of the invention is to thwart attacks related to stolen portable devices wherein an adversary is able to bypass the authentication by injecting malware and performing a HVT. Only after successful authentication, the key from secure storage area can be accessed and so the above attacks cannot be realized.

The invention is not limited to the described embodiments or examples. In particular, the described examples and embodiments may be combined.

The invention is not limited to mobile phone and can apply to portable device able to host a payment application like a payment smart card, a payment bracelet, a payment ring or a payment watch for instance.

In some embodiment, the portable device embeds a biometric sensor and associated algorithms allowing to authenticate the user.

In some embodiment, the portable device embeds a keypad and associated algorithms allowing to authenticate the user through a secret code entry.

The portable device may embed several payment application and as many secret data and keys as needed.

## Claims

1. A computed-implemented method for constructing a limited-use key (80) required by a payment application (10) hosted in a portable device (30) and able to perform a financial transaction for an amount,
wherein the payment application is configured to construct the limited-use key in two distinct ways, the first way and the second way; and
wherein the method comprises during said financial transaction:
- determining, by the payment application or a payment terminal coupled to the portable device, that the financial transaction is a High Value Transaction (HVT) if said amount is higher than a preset threshold and considering that the financial transaction is a Low Value Transaction (LVT) in the opposite case;
- constructing the limited-use key (80) by the payment application either, by said first way only in case of High Value Transaction or by said second way only in case of Low Value Transaction. ,

2. The method according to claim 1, wherein said portable device (30) is assigned to a user,
wherein the portable device comprises a storage area (39) storing a first key (31, Kshared) and a second key (32, Kdevice) which can be retrieved from the storage area whether or not the user has been successfully authenticated by the portable device; said second key (32, Kdevice) being uniquely assigned to said portable device;
wherein the storage area stores a third key (33, KAuth) which can be retrieved from the storage area only if the user has been successfully authenticated by the portable device; said first, second and third keys being distinct; and
wherein, when said first way is used, trying to retrieve, by the payment application, both said third (33,KAuth) and first (31,Kshared) keys from the storage area (39) and if said third (33,KAuth) key is accessible, building the limited-use key (80) using both said third (33,KAuth) and first (31,Kshared) keys; and
when said second way is used, getting, by the payment application, both said first (31,Kshared) and second (32,Kdevice) keys from the storage area (39) and building the limited-use key (80) using both said first (31,Kshared) and second (32,Kdevice) keys.

3. The method according to claim 2, wherein the portable device comprises pre-provisioned first (41,LukLvt), second (42,NonceLvt), third (43,LukHvt) and fourth (44,NonceHvt) secret data in encrypted form;
wherein in case of High Value Transaction (HVT), the payment application retrieves the third secret data (43,LukHvt) by deciphering its encrypted form using the first key (31,Kshared) and retrieves the fourth secret data (44,NonceHvt) by deciphering its encrypted form using the third key (33,KAuth), then the payment application constructs the limited-use key (80) by applying a first mathematical function to both said third and fourth secret data;
wherein in case of Low Value Transaction (LVT), the payment application retrieves the first secret data (41,LukLvt) by deciphering its encrypted form using the first key (31,Kshared) and retrieves the second secret data (42,NonceLvt) by deciphering its encrypted form using the second key (32,KDevice), then the payment application constructs the limited-use key (80) by applying a second mathematical function to both said first and second secret data.

4. The method according to claim 3, wherein the method includes a replenishment phase comprising:
- sending, by the portable device, a replenishment request (71) to a provisioning server (60);
- responsive to the replenishment request, generating, by the provisioning server, said first (41,LukLvt), second (42,NonceLvt), third (43,LukHvt) and fourth (44,NonceHvt) secret data so that the limited-use key (80) is equal to, the result of said first mathematical function applied to both said third and fourth secret data and so that the limited-use key (80) is equal to the result of said second mathematical function applied to both said first and second secret;
- then encrypting the first secret data (41,LukLvt) and the third secret data (43,LukHvt) using the first key (31,Kshared), encrypting the second secret data (42,NonceLvt) using the second key (32,KDevice) and encrypting the fourth secret data (44,NonceHvt) using the third key (33,KAuth);
- sending said first (41,LukLvt), second (42,NonceLvt), third (43,LukHvt) and fourth (44,NonceHvt) secret data in encrypted form to the portable device.

5. The method according to claim 4, wherein, during an initial provisioning phase prior to the replenishment phase, the method comprises:
- establishing a secure channel between the provisioning server (60) and the portable device (30);
- generating and storing said first key (31,Kshared) in both the provisioning server and the portable device;
- sending said second (32, Kdevice) and third (33, KAuth) keys from the provisioning server to the portable device through the secure channel;
- storing the third key (33, KAuth) in the storage area (39) by specifying that the payment application is authorized to retrieve said third key from the storage area only if the user has been successfully authenticated by the portable device and storing the second key (32, Kdevice) in the storage area by specifying that the payment application is authorized to retrieve the second key from the storage area whether the user has been successfully authenticated or not.

6. A portable device (30) comprising a payment application (10) configured to perform a financial transaction for an amount,
wherein the payment application is configured to construct a limited-use key (80) in two distinct ways, the first way and the second way; and
wherein during said financial transaction, the payment application is configured to:
- be informed by a coupled payment terminal that the financial transaction is a High Value Transaction (HVT) if said amount is higher than a preset threshold or that the financial transaction is a Low Value Transaction (LVT) in the opposite case; and
- construct the limited-use key (80) either by said first way only in case of High Value Transaction or by said second way only in case of Low Value Transaction.

7. The portable device according to claim 6, wherein said portable device is a mobile phone, a payment smart card, a payment bracelet, a payment ring, or a payment watch.

8. The portable device according to claim 6, wherein said portable device is a mobile phone comprising a digital wallet hosting the payment application (10).

9. The portable device according to claim 6, wherein said portable device is assigned to a user,
wherein the portable device comprises a storage area (39) storing a first key (31, Kshared) and a second key (32, Kdevice) which can be retrieved from the storage area whether or not the user has been successfully authenticated by the portable device; said second key (32, Kdevice) being uniquely assigned to said portable device;
wherein the storage area stores a third key (33, KAuth) which can be retrieved from the storage area only if the user has been successfully authenticated by the portable device; said first, second and third keys being distinct; and
wherein, when said first way is used, the payment application is configured to try to retrieve both said third (33,KAuth) and first (31,Kshared) keys from the storage area (39) and if said third (33,KAuth) key is accessible, to construct the limited-use key (80) using both said third (33,KAuth) and first (31,Kshared) keys; and
when said second way is used, the payment application is configured to get both said first (31,Kshared) and second (32,Kdevice) keys from the storage area (39) and to construct the limited-use key (80) using both said first (31,Kshared) and second (32,Kdevice) keys.

10. The portable device according to claim 9, wherein the portable device comprises pre-provisioned first (41,LukLvt), second (42,NonceLvt), third (43,LukHvt) and fourth (44,NonceHvt) secret data in encrypted form;
wherein in case of High Value Transaction (HVT), the payment application is configured to retrieve the third secret data (43,LukHvt) by deciphering its encrypted form using the first key (31,Kshared) and to retrieve the fourth secret data (44,NonceHvt) by deciphering its encrypted form using the third key (33,KAuth), then the payment application is configured to construct the limited-use key (80) by applying a first mathematical function to both said third and fourth secret data;
wherein in case of Low Value Transaction (LVT), the payment application is configured to retrieve the first secret data (41,LukLvt) by deciphering its encrypted form using the first key (31,Kshared) and to retrieve the second secret data (42,NonceLvt) by deciphering its encrypted form using the second key (32,KDevice), then the payment application is configured to construct the limited-use key (80) by applying a second mathematical function to both said first and second secret data.

11. A system (70) comprising the portable device according to claim 10 and a provisioning server (60) configured to carry out a replenishment phase;
wherein, the portable device is configured to send a replenishment request (71) to the provisioning server;
wherein, responsive to the replenishment request, the provisioning server is configured to generate said first (41,LukLvt), second (42,NonceLvt), third (43,LukHvt) and fourth (44,NonceHvt) secret data so that the limited-use key (80) is equal to the result of said first mathematical function applied to both said third and fourth secret data and so that the limited-use key (80) is equal to the result of said second mathematical function applied to both said first and second secret;
wherein the provisioning server is configured to encrypt the first secret data (41,LukLvt) and the third secret data (43,LukHvt) using the first key (31,Kshared), to encrypt the second secret data (42,NonceLvt) using the second key (32,KDevice) and to encrypt the fourth secret data (44,NonceHvt) using the third key (33,KAuth); and
wherein the provisioning server is configured to send said first (41,LukLvt), second (42,NonceLvt), third (43,LukHvt) and fourth (44,NonceHvt) secret data in encrypted form to the portable device.

12. The system according to claim 11, wherein, during an initial provisioning phase prior to the replenishment phase, the portable device and the provisioning server are configured to establish a secure channel between them;
wherein, the system is configured to generate and store said first key (31,Kshared) in both the provisioning server and the portable device;
wherein the provisioning server is configured to send said second (32, Kdevice) and third (33, KAuth) keys to the portable device;
wherein the portable device is configured to store the third key (33, KAuth) in the storage area (39) by specifying that the third key can be retrieved from the storage area only if the user has been successfully authenticated by the portable device and to store the second key (32, Kdevice) in the storage area by specifying that the second key can be retrieved from the storage area whether the user has been successfully authenticated or not.
